Europäisches Patentamt

European Patent Office

Office européen des brevets

(11) Veröffentlichungsnummer: **0 211 417**
**A1**

## (12) EUROPÄISCHE PATENTANMELDUNG

(21) Anmeldenummer: **86110661.5**

(22) Anmeldetag: **01.08.86**

(51) Int. Cl.4: **B62D 53/08**

(30) Priorität: **06.08.85 CH 3361/85**

(43) Veröffentlichungstag der Anmeldung:
**25.02.87 Patentblatt 87/09**

(84) Benannte Vertragsstaaten:
**AT BE DE FR IT NL SE**

(71) Anmelder: **GEORG FISCHER**
**AKTIENGESELLSCHAFT**
**Mühlentalstrasse 105**
**CH-8201 Schaffhausen(CH)**

(72) Erfinder: **Jakob, Lothar**
**Schrotzburgstrasse 11**
**D-7702 Gottmadingen(DE)**

(54) **Aufliegerplattenanordnung.**

(57) Es wird eine Aufliegerplattenanordnung (B) für die Aufnahme eines Zugsattelzapfens (3) vorgeschlagen. Die Anordnung besteht aus zwei Platten - (1,2), von denen mindestens eine Profilierungen aufweist, und übereinander derart angeordnet sind, dass sich eine maximale Versteifung in allen Richtungen ergibt.

Die vorgeschlagene Konstruktion ersetzt bisher übliche schwerfällige Konstruktionen mit Plattendicken im Bereich bis zu 20 mm.

Fig. 1

EP 0 211 417 A1

## Aufliegerplattenanordnung

Die vorliegende Erfindung betrifft eine Aufliegerplattenanordnung mit einem Zugsattelzapfen.

Aufliegerplatten werden gewöhnlich an der Unterseite eines Sattelaufliegers angeordnet.

Bisher bekannte Aufliegerplatten zeichnen sich dadurch aus, dass die Befestigungsorgane des Zugsattelzapfens einen festen Teil der Aufliegerplatte bilden oder mit derselben unmittelbar verbunden sind.

Der Zugsattelzapfen muss Belastungen im Bereich von 360 ° aufnehmen. Ferner überträgt der Zugsattelzapfen das Biegemoment unmittelbar auf die Aufliegerplatte. Daher muss sie stark genug sein, um die maximal auftretenden Kräfte aufzunehmen. Plattendicken bis zu 20 mm sind in der Praxis heute üblich.

Aufgabe der vorliegenden Erfindung ist es, eine einfache und wirtschaftliche Leichtbaukonstruktion vorzuschlagen, die festigkeitsmässig den Anforderungen entspricht, die an eine Aufliegerplatte gestellt werden.

Diese Aufgabe wird erfindungsgemäss durch den kennzeichnenden Teil des Anspruches 1 gelöst.

Weitere vorteilhafte Ausgestaltungen ergeben sich aus den abhängigen Ansprüchen.

Anhand der beigelegten Zeichnungen werden bevorzugte Ausführungsbeispiele näher erläutert.

Es zeigen:

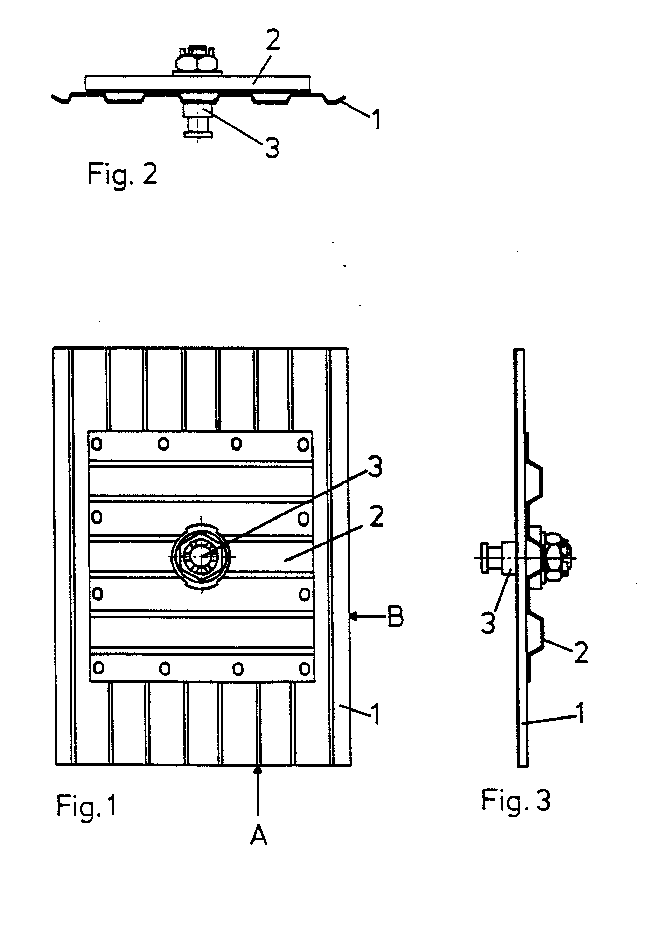

Fig. 1 eine Draufsicht auf eine erfindungsgemässe Anordnung,

Fig. 2 eine Ansicht in Richtung A,

Fig. 3 eine Ansicht in Richtung B,

Fig. 4 einen Schnitt durch eine Variante der erfindungsgemässen Anordnung und

Fig. 5 eine Draufsicht auf die Anordnung gemäss Fig. 4.

Eine Platte 1 weist ein wellenförmig ausgestaltetes Versteifungsprofil auf. Die Wellenachsen fallen mit der Längsrichtung des Aufliegers, an dem die Platte angebracht wird, zusammen. Ueber dieser ersten Platte mit wellenförmiger Profilierung ist eine Platte 2 angeordnet, die ebenfalls wellenförmig profiliert ist. Dabei sind die Wellenachsen der Platte 2 quer zur Wellenachse der Platte 1 angeordnet. Durch diese Anordnung erhält man eine hohe Biegesteifigkeit in alle Richtungen, sogar bei sehr dünnwandigen Platten, so dass die Beanspruchungen des Zugsattelzapfens, die vom Fahrbetrieb herrühren, aufgefangen werden können. Die Platten sind miteinander verschweisst, verschraubt oder auf eine andere beliebige Art verbunden.

Für die Durchführung des Zugsattelzapfens 3 durch die Platten 1 und 2 sind entsprechende Ausnehmungen vorgesehen. Die Verbindung Zugsattelzapfen -Aufliegerplatte erfolgt z.B. über einen Teller oder eine Büchse, die üblicherweise mit der Aufliegerplatte verschweisst wird.

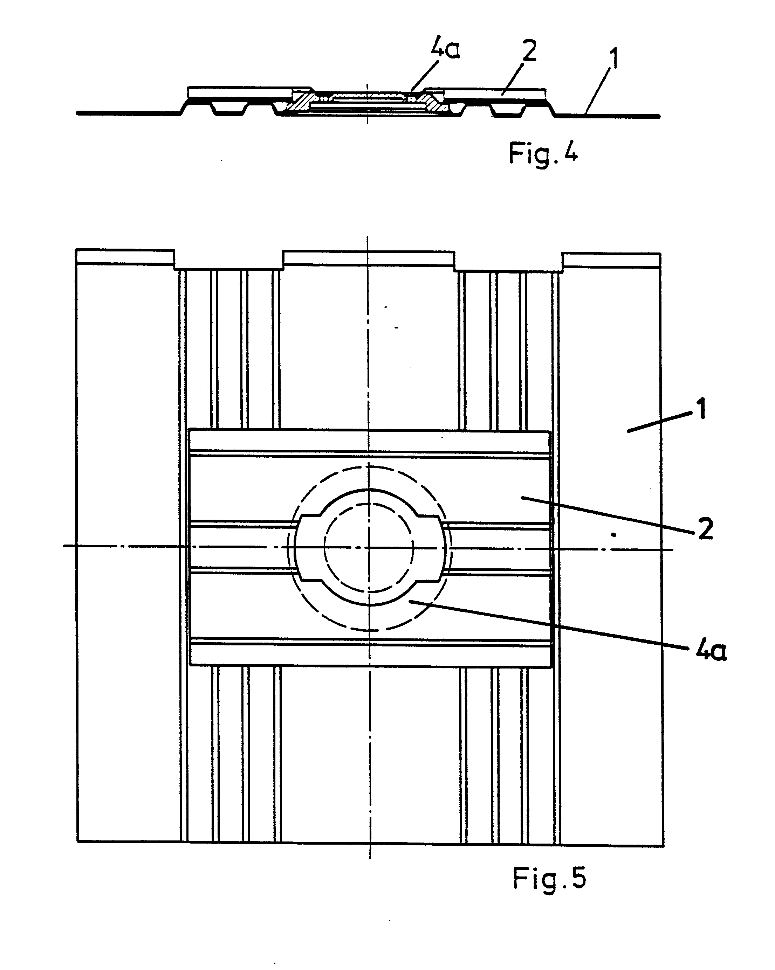

Eine andere bevorzugte Variante ist in der Figur 4 dargestellt. Bei dieser Ausführung werden nicht zwei Platten mit wellenförmiger Profilierung verwendet. Eine Versteifung der Platte 1 wird hier mit einer kreisringförmiger Vertiefung 4 erzielt. Das Zentrum des Kreisringes 4a fällt bei dieser Ausführung mit dem Zentrum des Zugsattelzapfens zusammen. Dies wirkt sich insbesondere günstig auf die Beanspruchungsverhältnisse aus, die vom Zugsattelzapfen auf die Platte übertragen werden. Als Gegenplatte 2 kann sowohl eine ebene wie auch eine profilierte Platte gemäss Fig. 4 vorgesehen sein. Die Verbindung der Platte 2 mit der Platte 1 erfolgt vorzugsweise im Kreisringbereich 4a.

Durch die vorgeschlagene gegeneinander versetze Anordnung der Profilierungen wird ausser den festigkeitsbedingten noch ein weiterer Vorteil erreicht. Nämlich dass sich offene Schmiernuten bzw. Schmiertaschen ergeben, so dass das Fett jederzeit abfliessen kann. Es findet keine Klumpenbildung statt noch erfolgt eine Verstopfung.

Der besondere Aspekt der beschriebenen Anordnung liegt jedoch in der Gewichtseinsparung, weil die Kombination der profilförmigen Platten eine Leichtbaukonstruktion ergibt. Als Werkstoff kommen z.B. Gusswerkstoffe, Stahlblech oder Kunststoff in Frage. Es können beide Platten aus dem gleichen Werkstoff oder einer Kombination gefertigt sein.

## Ansprüche

1. Aufliegerplattenanordnung mit einem Zugsattelzapfen, dadurch gekennzeichnet, dass mindestens zwei Platten übereinander angeordnet und miteinander verbunden sind, wobei mindestens eine der Platten eine Profilierung aufweist und dass die Platten Ausnehmungen für die Aufnahme des Zugsattelzapfens aufweisen.

2. Anordnung nach Anspruch 1, dadurch gekennzeichnet, dass beide Platten eine Profilierung aufweisen.

3. Anordnung nach Anspruch 1, dadurch gekennzeichnet, dass die Platten im wesentlichen wellenförmig profiliert sind.

4. Anordnung nach Anspruch 1, dadurch gekennzeichnet, dass die Profilierung der Platte derart angeordnet ist, dass die neutrale Achse der Platte nicht in einer Ebene liegt.

5. Anordnung nach Anspruch 1, dadurch gekennzeichnet, dass eine der Platten in Richtung der Längsachse des Aufliegers Profilierungen aufweist.

6. Anordnung nach Anspruch 1, dadurch gekennzeichnet, dass die Profilierung kreisringförmig ausgebildet ist.

7. Anordnung nach Anspruch 2, dadurch gekennzeichnet, dass eine der Platten im wesentlichen quer zur Längsachse des Aufliegers profiliert ist.

8. Anordnung nach Anspruch 1, dadurch gekennzeichnet, dass der Zugsattelzapfen mittels einer Befestigungsbüchse oder direkt mit mindestens einer Platte verbunden ist.

9. Anordnung nach einem der Ansprüche 1 bis 5, dadurch gekennzeichnet, dass mindestens eine der Platten aus Blech, Guss, Kunststoff besteht.

**Fig. 2**

**Fig. 1**

A

B

**Fig. 3**

Fig.4

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A- 821 306 (TRAILMOBILE)<br><br>* Seite 2, Zeile 47 - Seite 3, Zeile 4; Seite 4, Zeilen 17-45; Seite 5, Zeile 112 - Seite 6, Zeile 33; Figuren 2,4,6,8-11 *<br><br>--- | 1,2,5, 7-9 | B 62 D  53/08 |
| A | FR-A-1 109 700 (LEFFONDRE)<br><br>* Ins besondere Seite 1, rechte Spalte, Absatz 3; Figuren 1,2; Absatz 5; Zusammenfassung(B) *<br><br>--- | 1-3,7, 9 | |
| A | US-A-3 598 421 (MASON)<br><br>* Figur 5; Spalten 1,2, "Summary of the invention" *<br><br>----- | 1,2,5, 7-9 | |

| RECHERCHIERTE SACHGEBIETE (Int. Cl.4) |
|---|
| B 62 D<br>B 61 D<br>B 61 F |

Der vorliegende Recherchenbericht wurde für alle Patentansprüche erstellt.

| Recherchenort | Abschlußdatum der Recherche | Prüfer |
|---|---|---|
| DEN HAAG | 25-09-1986 | SCHMAL R. |